# EUROPÄISCHE PATENTANMELDUNG

(11) **EP 0 893 716 A1**
(43) Veröffentlichungstag der Anmeldung: **27.01.1999**
(21) Anmeldenummer: 97810513.8
(22) Anmeldetag: 21.07.1997
(51) Int. Cl.: G02B 6/38

(54) **Buchsenteil für eine insbesondere optische Steckverbindung sowie Steckverbindung für Lichtwellenleiter**

(71) Anmelder: DIAMOND S.A., CH-6616 Losone-Locarno (CH)
(72) Erfinder: de Marchi, Silverio, CH-6612 Ascona (CH)
(74) Vertreter: Wenger, René

(57) **Zusammenfassung**

Ein Buchsenteil (1) weist ein Buchsengehäuse auf, dessen Öffnung zum Einführen eines Steckerteils (31) mit einer Schutzklappe (15) verschlossen ist, die beim Einführen des Steckerteils gegen die Innenseite des Buchsengehäuses aufschwenkbar ist. Die Schutzklappe ist als Sperrklinke (21) zum Arretieren des Steckerteils (31) im Buchsenteil (1) ausgebildet, so dass separate Rastmittel nicht nötig sind. Bei ganz eingestecktem Steckerteil rastet die Sperrklinke hinter einer Sperrleiste (38) ein. Zur Entriegelung kann ein Entriegelungshebel (39) an einem Griffstück (40) betätigt werden.

## Beschreibung

Die Erfindung betrifft ein Buchsenteil für eine insbesondere optische Steckverbindung gemäss dem Oberbegriff von Anspruch 1. Die Erfindung betrifft ferner eine Steckverbindung für Lichtwellenleiter gemäss dem Oberbegriff von Anspruch 9.

Es ist bereits bekannt, an Buchsenteilen für eine Steckverbindung die Öffnung mit einer Schutzklappe zu verschliessen, welche beim Einführen des Steckerteils gegen die Innenseite des Buchsenteils aufschwenkbar ist. Derartige Schutzklappen schützen die Innenseite des Buchsenteils vor Verschmutzung, was gerade bei optischen Steckverbindungen besonders wichtig ist. Die Schutzklappe dient bei optischen Steckverbindungen aber auch dazu, um das Austreten von Laserlicht aus dem Buchsenteil zu verhindern. Durch die JP-A-57-142607 ist ein Buchsenteil für ein optisches Sender/Empfängerelement bekanntgeworden, bei dem beim Einführen eines Lichtwellenleiters eine Verschlussscheibe gegen die Kraft einer Feder aufgeschwenkt wird. Diese Verschlussscheibe dichtet die Eintrittsöffnung weitgehend ab. Ein gattungsmässig vergleichbares Buchsenteil ist ausserdem durch die EP-A-570 652 bekanntgeworden, bei dem die Schutzklappe allerdings nur die Funktion einer Blende gegen austretendes Laserlicht erfüllt.

Ein Problem bei den bekannten Buchsenteilen insbesondere auch für optische Steckverbindungen besteht darin, dass das Steckerteil im Buchsenteil in seiner Endstellung arretiert werden muss. Ein Zug am Kabel würde andernfalls dazu führen, dass die Verbindung unterbrochen oder dass das Steckerteil gar aus dem Buchsenteil herausgezogen wird. Für die Verrastung des Steckerteils werden Rastvorrichtungen beispielsweise in der Form von Sperrklinken eingesetzt, wie dies auch aus der EP-A-570 652 ersichtlich ist. Der Aufbau und die Montage des Buchsenteils wird dadurch jedoch erheblich kompliziert.

Es ist daher eine Aufgabe der Erfindung, ein Buchsenteil der eingangs genannten Art zu schaffen, das im konstruktiven Aufbau und in der Montage wesentlich vereinfacht wird. Die Schutzklappe soll dabei ein Element bilden, das in der gesamten Steckverbindung mehrere Funktionen ausübt. Diese Aufgabe wird erfindungsgemäss mit einem Buchsenteil gelöst, das die Merkmale im Anspruch 1 aufweist. An der Steckverbindung für Lichtwellenleiter ist die Erfindung durch die Merkmale im Anspruch 9 gekennzeichnet. Die Ausbildung der Schutzklappe als Sperrklinke zum Arretieren des Steckerteils im Buchsenteil ermöglicht es, auf zusätzliche Rastmittel am Buchsenteil ganz zu verzichten. Die Schutzklappe muss ohnehin unter Federvorspannung in Schliessstellung gehalten werden, wobei erfindungsgemäss die gleiche Vorspannung auch dazu dient, die Schutzklappe in der Sperrstellung zu halten.

Die Schutzklappe ist vorteilhaft um seitliche Gelenknocken schwenkbar, welche in Lagerbohrungen am Buchsengehäuse eingerastet sind. Auf diese Weise lassen sich die Schutzklappen einfach montieren oder auswechseln, ohne dass separate Achsteile erforderlich sind.

Eine besonders vorteilhafte Vorspannung der Schutzklappe lässt sich erreichen, wenn diese mittels einer Feder in die Schliessstellung vorgespannt ist, welche im Abstand zur Schwenkachse der Schutzklappe im Buchsengehäuse gelagert ist und welche an der Innenseite der Schutzklappe angreift. Auf diese Weise lässt sich zwischen Schliessstellung und Öffnungsstellung ein relativ grosser Federweg zurücklegen, ohne dass die Feder selbst im Gelenkbereich der Schutzklappe Platz beansprucht. Die Krafteinleitung an der Innenseite der Schutzklappe im Abstand zur Schwenkachse ergibt eine Hebelwirkung, was eine Reduktion der nötigen Federkraft ermöglicht. Die Feder kann dabei ein etwa U-förmiger Federbügel sein, dessen seitlich abgewinkelte Enden der U-Schenkel gelenkig im Buchsengehäuse gelagert sind und dessen Verbindungsabschnitt der U-Schenkel an einer Lagerstelle an der Schutzklappe anliegt. Ein derartiger Federbügel lässt sich relativ leicht lagern und er beansprucht wenig Platz im Buchsengehäuse. Zur Verbesserung der Federeigenschaften kann jeder U-Schenkel des Federbügels einen Abschnitt aufweisen, der als Schraubendrehfeder ausgebildet ist. Selbstverständlich wären aber auch andere Federelemente, insbesondere Blattfedern denkbar.

Eine besonders vorteilhafte Arretierung des Steckerteils im Buchsenteil lässt sich erreichen, wenn auf der Aussenseite der Schutzklappe eine Sperrnase angeordnet ist, welche bei ganz eingestecktem Steckerteil hinter einer Sperrleiste am Steckerteil einrastbar ist. Diese Sperrnase lässt sich bezüglich Einrasttiefe, Einrastwinkel usw. genau dimensionieren und dem Steckerteil anpassen. Selbstverständlich wäre es aber auch denkbar, dass z.B. der äusserste Randabschnitt der Schutzklappe selber hinter einer Sperrleiste oder dergleichen am Steckerteil einrastet.

Weitere Vorteile lassen sich erzielen, wenn auf der Aussenseite der Schutzklappe zwei sich in Einsteckrichtung erstreckende, seitlich angeordnete und parallele Führungswangen angeordnet sind, welche der Führung und/oder Steuerung des Steckerteils beim Einstecken in das Buchsenteil dienen. Diese Führungswangen erleichtern einerseits das Ansetzen des Steckerteils an das Buchsenteil zum Einleiten des Einsteckvorgangs und zum Wegdrücken der Schutzklappe in die Öffnungsstellung. Anderseits können die Führungswangen aber auch eine Steuerfunktion übernehmen, wenn an der Stirnseite des Steckerteils ein gelenkig gelagerter Schutzdeckel angeordnet ist, der durch Einschieben des Steckerteils in das Buchsenteil aus einer Schliessposition in eine Öffnungsposition bewegbar ist. Am Schutzdeckel können dabei Steuernocken angeordnet sein, die mit den Führungswangen zusammenwirken, wobei deren Aussenränder als Steuerkulissen dienen. Der Schutzdeckel wird dabei im Kontakt mit der Schutzklappe gleichzeitig aufgeschwenkt, so dass er beim Erreichen der Endposition des Steckerteils dessen Stirnseite völlig freigibt. Ein derartiges Steckerteil ist ebenfalls bereits in der erwähnten EP-A-570 652 beschrieben. Neben der Funktion als Sperrklinke und als Steuerungsmittel für das Steckerteil kann die Schutzklappe schliesslich noch eine weitere Funktion übernehmen, wenn auf ihrer Aussenseite ein Codierungsabschnitt bestehend aus Materialaussparungen und Materialerhebungen angeordnet ist, der bei ganz eingestecktem Steckerteil mit einem korrespondierenden Codierungsabschnitt am Steckerteil zusammenwirkt. Bei einer unzulässigen Paarung der Codierungsabschnitte ist ein Arretieren des Steckerteils im Buchsenteil durch die Schutzklappe nicht möglich. Der Codierungsabschnitt an der Schutzklappe ist vorzugsweise in einem Bereich nahe der Schwenkachse angeordnet und zwar derart, dass die Codierungsabschnitte der Schutzklappe und des Steckerteils im eingesteckten Zustand etwa auf einer gemeinsamen Ebene parallel zur Einsteckrichtung liegen. Durch die Codierungsabschnitte ist es möglich, dass in ein bestimmtes Buchsenteil jeweils nur die dafür vorgesehenen Steckerteile eingesteckt werden können. An einem Gerät mit verschiedenen Steckverbindungen werden auf diese Weise Fehlmanipulationen verhindert. Die Anordnung des Codierungsabschnitts an der Schutzklappe erlaubt ein einfaches Austauschen bei stets gleichbleibendem Buchsengehäuse.

Zum Lösen der Arretierung im Buchsenteil ist am Steckerteil vorteilhaft ein Entriegelungshebel angeordnet, welcher derart mit der Schutzklappe in Wirkverbindung steht, dass bei seiner Betätigung die Arretierung an der Sperrleiste lösbar ist. Ein derartiger Entriegelungshebel zum Ausheben einer Sperrklinke ist ebenfalls bereits durch die EP-A-570 652 bekanntgeworden. Selbstverständlich wäre es aber auch denkbar, die Arretierung unmittelbar durch Zurückschwenken der Schutzklappe zu lösen, wobei an der Schutzklappe ein entsprechendes Griffstück vorgesehen werden müsste.

Der bereits erwähnte Codierabschnitt am Steckerteil wird vorteilhaft am Entriegelungshebel angeordnet, weil auch der Entriegelungshebel ähnlich wie die Schutzklappe als separates Teil in das Steckergehäuse eingeschnappt werden kann.

Weitere Vorteile und Einzelmerkmale der Erfindung ergeben sich aus der nachfolgenden Beschreibung eines Ausführungsbeispiels und aus den Zeichnungen. Es zeigen:
- Figur 1: ein Querschnitt durch ein erfindungsgemässes Buchsenteil,
- Figur 2: eine Draufsicht auf das Buchsenteil gemäss Figur 1,
- Figur 3: eine Ansicht auf die Stirnseite des Buchsenteils gemäss Figur 1,
- Figur 4: eine Seitenansicht eines Federbügels,
- Figur 5: eine Draufsicht des Federbügels gemäss Figur 4,
- Figur 6: ein Querschnitt durch eine Schutzklappe,
- Figur 7: eine Ansicht auf die Innenseite der Schutzklappe gemäss Figur 6,
- Figur 8: eine perspektivische Darstellung einer Schutzklappe vor und nach dem Einsetzen in das Buchsengehäuse,
- Figur 9: ein Querschnitt durch die Öffnungspartie eines Buchsengehäuses beim Aufschwenken der Schutzklappe,
- Figur 10: eine perspektivische Darstellung eines Steckerteils mit geschlossenem Schutzdeckel an der Stirnseite,
- Figur 11: das Steckerteil gemäss Figur 10 mit geöffnetem Schutzdeckel, und
- Figuren 12a bis 12g: Querschnitte durch das Buchsenteil beim Einschieben eines Steckerteils in unterschiedlichen Positionen.

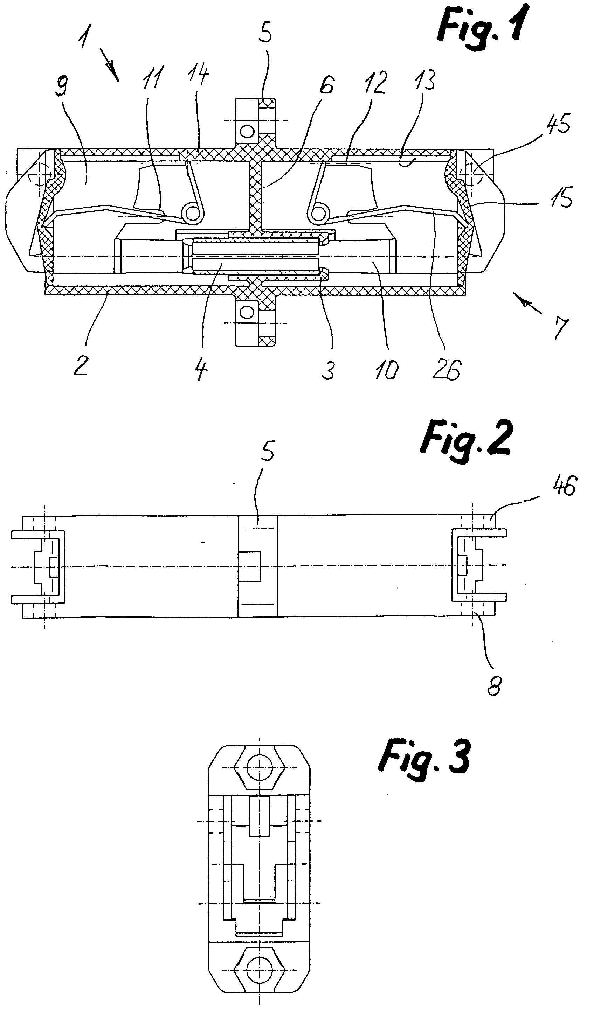

Das Buchsenteil 1 beim dargestellten Ausführungsbeispiel ist als Mittelteil ausgebildet, in das von zwei Seiten her ein Steckerteil eingesteckt werden kann. Es könnte sich beim Buchsenteil aber auch um ein sogenanntes Receptecal handeln, bei dem ein optisches Element wie z.B. eine Leuchtdiode mit einem Steckerteil gekoppelt wird. Gemäss den Figuren 1 bis 3 besteht das Buchsenteil 1 im wesentlichen aus einem im Querschnitt etwa rechteckigen Buchsengehäuse 2 aus Kunststoffmaterial. An einer Mittelwand 6 ist eine Buchsenhalterung 3 angeordnet, in welcher die eigentliche Buchse 4 gehalten ist. Diese Buchse besteht beispielsweise aus einer in Längsrichtung geschlitzten Keramik- oder Hartmetallhülse, welche die eingesteckten Steckerstifte aufeinander zentriert. Das Buchsengehäuse 2 ist vorzugsweise einstückig mit der Buchsenhalterung ausgebildet.

An einem Flansch 5 kann das Buchsenteil 1 beispielsweise an einer Gerätewand befestigt werden. Jede Eintrittsöffnung 7 am Buchsengehäuse ist mit je einer Schutzklappe 15 verschlossen und zwar am äussersten Ende der Öffnung und derart, dass die Schutzklappe 15 die Öffnung passgenau verschliesst. Auf diese Weise wird das Eindringen von Staub, Spritzwasser usw. in das Buchsengehäuse verhindert.

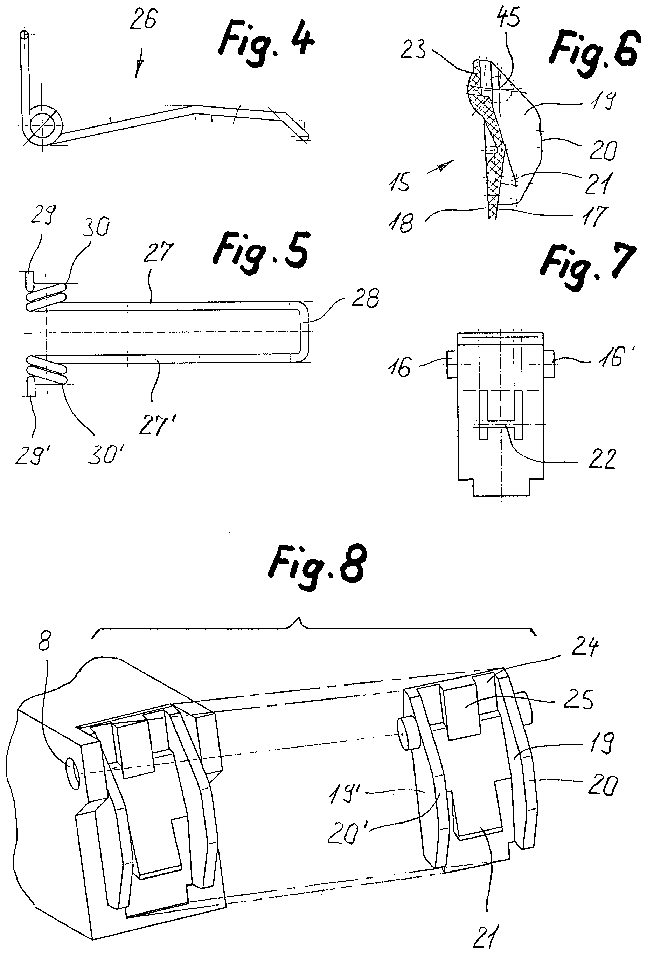

Die schwenkbare Lagerung der Schutzklappe um eine Schwenkachse 45 erfolgt mit Hilfe von seitlichen Gelenknocken 16, 16' (Figur 7), welche in Lagerbohrungen 8 am Buchsengehäuse eingerastet sind. Die Lagerbohrungen 8 sind an einer Lagergabel 46 am Buchsengehäuse 2 angeordnet, die sich seitlich etwas über die Öffnung 7 hinaus erstreckt.

Das Buchsengehäuse 2 ist mit parallelen Seitenwänden 9 versehen, auf deren Innenseite je eine Führungsnut 10 für die Geradeführung des Steckerteils angeordnet ist. Ausserdem ist je eine Steuernut 11 und eine Haltenut 12 für die Feder vorgesehen. Auf der Innenseite der Deckenwand 14 ist je eine Ausnehmung 13 angeordnet, die bei ganz aufgeschwenkter Schutzklappe einen Teil der Feder aufnimmt.

Weitere Einzelheiten einer Schutzklappe sind aus den Figuren 6 und 7 ersichtlich. An der Innenseite 18 ist im Abstand zur Schwenkachse 45 eine Lagerstelle 22 für die Feder in der Form einer Vertiefung vorgesehen. Auf der Aussenseite 17 der Schutzklappe 15 ist eine Sperrnase 21 angeordnet, die sich nur über einen Teil der Breite der Schutzklappe erstreckt. Die keilförmige Auflauffläche dieser Sperrnase fluchtet mit dem oberen Abschnitt der Aussenseite 17.

Auf beiden Seiten der Schutzklappe sind Führungswangen 19, 19' angeordnet, die sich in Einsteckrichtung erstrecken und deren Aussenkante je eine Steuerkulisse 20, 20' bilden.

Schliesslich bildet der oberste Abschnitt der Schutzklappe nahe der Schwenkachse 45 einen Codierabschnitt bestehend aus Materialaussparungen 24 bzw. Materialerhebungen 25. Ersichtlicherweise kann dieser Codierabschnitt ganz unterschiedlich ausgestaltet sein.

Jede Schutzklappe 15 wird durch eine Feder 26 in die Schliessstellung vorgespannt. Der Aussenrand der Deckenwand 14 dient dabei als Anschlag, an dem die Schliessposition definiert wird. Einzelheiten der Feder 26 sind aus den Figuren 4 und 5 ersichtlich. Die Feder ist als etwa U-förmiger Bügel mit parallelen U-Schenkel 27 und 27' ausgebildet. Diese U-Schenkel sind über einen Verbindungsabschnitt 28 miteinander verbunden, der formschlüssig in die Lagerstelle 22 an der Schutzklappe 15 passt. Wie aus Figur 4 ersichtlich, ist der Bügel seitlich etwas abgekröpft, damit er die Schutzklappe in der Öffnungsstellung übergreifen kann. Jeder U-Schenkel des Federbügels ist mit zwei Windungen einer Schraubendrehfeder 30, 30' versehen. Die Enden 29, 29' der U-Schenkel sind abgewinkelt. An diesen abgewinkelten Enden kann die Feder 26 von der Öffnungsseite her in die seitlichen Haltenuten 12 eingeschoben werden. In der Schliessstellung verläuft die Feder 26 annähernd rechtwinklig, wobei die Schraubendrehfedern im Buchsengehäuse unmittelbar über dem Ende der Buchsenhalterung 3 liegen.

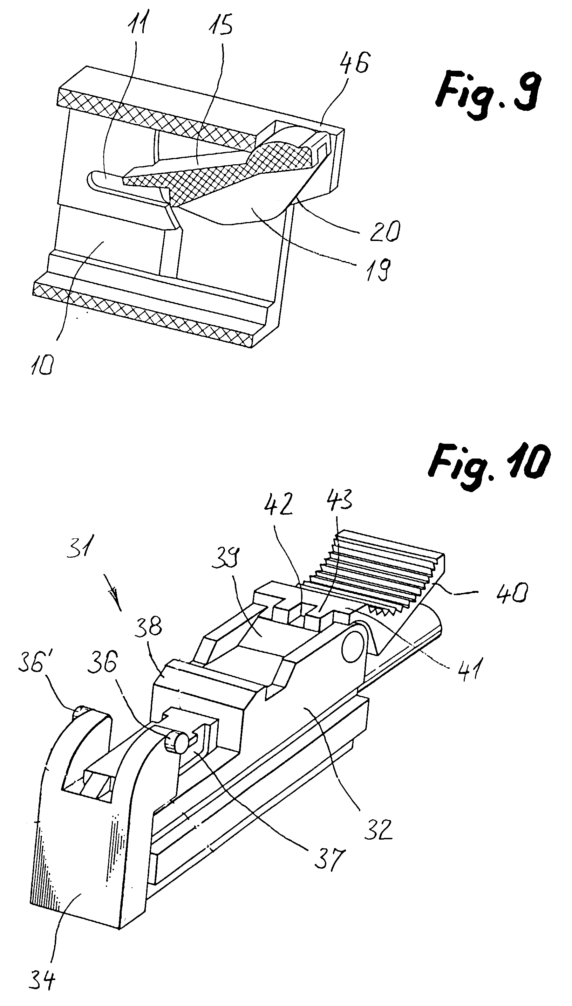

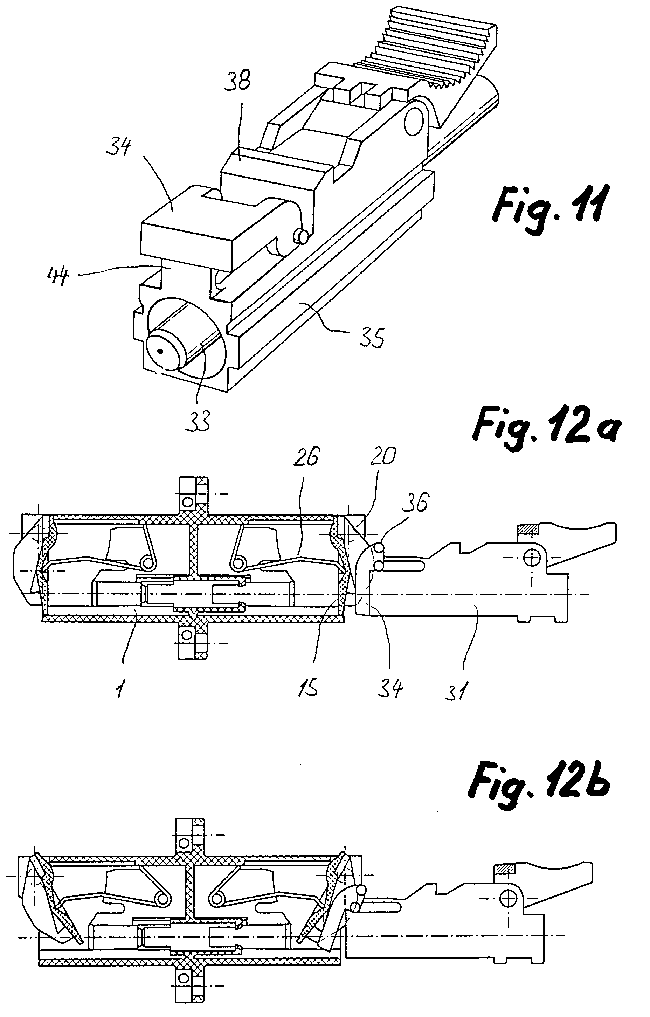

Einzelheiten eines Steckerteils 31 sind aus den Figuren 10 und 11 ersichtlich, wobei allerdings auch noch auf die Offenbarung der EP-A-570 652 Bezug genommen wird. Das Steckerteil verfügt über ein Steckergehäuse 32 aus Kunststoffmaterial, in welchem über hier nicht näher dargestellte Mittel ein Steckerstift beispielsweise aus Keramik gehalten ist. Im Zentrum dieses Steckerstifts ist ein Lichtwellenleiter fixiert. Seitlich am Steckergehäuse 32 sind Führungsleisten 35 angeordnet, welche formschlüssig in die Führungsnuten 10 am Buchsenteil passen.

Die Stirnseite 44 des Steckergehäuses ist mit einem Schutzdeckel 34 verschlossen, der gelenkig am Steckergehäuse gelagert ist. Im vorliegenden Fall ist der Schutzdeckel schwenkbar und verschiebbar gelagert, so dass er zunächst um ca. 90° aufgeschwenkt und dann aus Platzgründen relativ zum Steckergehäuse zurückgezogen werden kann. Diese zurückgezogene Öffnungsposition ist in Figur 11 dargestellt. Die gelenkige und geführte Lagerung des Schutzdeckels erfolgt an seitlichen Lagernuten 37. Die in Figur 11 dargestellte Lage des Schutzdeckels ist im ausgestreckten Zustand in Wahrheit nicht möglich, weil der Schutzdeckel über hier nicht dargestellte Federmittel stets in die Schliessstellung vorgespannt ist. Am Schutzdeckel 34 sind seitliche Steuernocken 36, 36' angeordnet, die in der gleichen Ebene verlaufen wie die Führungswangen 19, 19' der Schutzklappe. Diese Steuernocken wirken mit den Führungskulissen 20, 20' zusammen, wenn das Steckerteil in das Buchsenteil eingesteckt wird. In der Endphase des Einsteckvorgangs übergeben die Führungskulissen die Steuernocken an die seitlichen Steuernuten 11, wie aus Figur 9 ersichtlich ist. Am geschlossenen Ende dieser Steuernuten schlagen die Steuernocken 36 an, so dass sich der Schutzdeckel 34 relativ zum Buchsengehäuse nicht mehr bewegt, sondern lediglich relativ zum Steckergehäuse in die Position gemäss Figur 11 verschoben wird. Am Entriegelungshebel 39 ist etwa im Bereich seiner gelenkigen Lagerung am Steckergehäuse ebenfalls ein Codierungsabschnitt 41 bestehend aus Materialausnehmungen und Materialerhebungen angeordnet. Dieser Codierungsabschnitt korrespondiert mit demjenigen an der Schutzklappe, so dass die beiden Abschnitte formschlüssig ineinander greifen.

Das Steckerteil 31 verfügt ferner über eine Sperrleiste 31, hinter der die Sperrnase 21 der Schutzklappe einrasten kann. Für die Entriegelung ist ein spezieller Entriegelungshebel 39 vorgesehen, der gelenkig am Steckergehäuse 32 gelagert ist und der über ein Griffstück 40 verfügt.

Anhand der Figuren 12a bis 12g wird anschliessend ein Steckvorgang und die mehrfache Funktion einer Schutzklappe beschrieben. Figur 12a zeigt das bereits zwischen den Führungswangen positionierte Steckerteil kurz vor dem Einschieben in das Buchsenteil. Sowohl die Schutzklappe 15 als auch der Schutzdeckel 34 sind noch in der vollständigen Schliessstellung gehalten.

Gemäss Figur 12b hat der Einsteckvorgang bereits begonnen und die Schutzklappe 15 ist gegen die Kraft der Feder 26 bereits um 30° verschwenkt. Die Führungskulissen an den Seitenwangen bewirken ein Öffnen des Schutzdeckels 34.

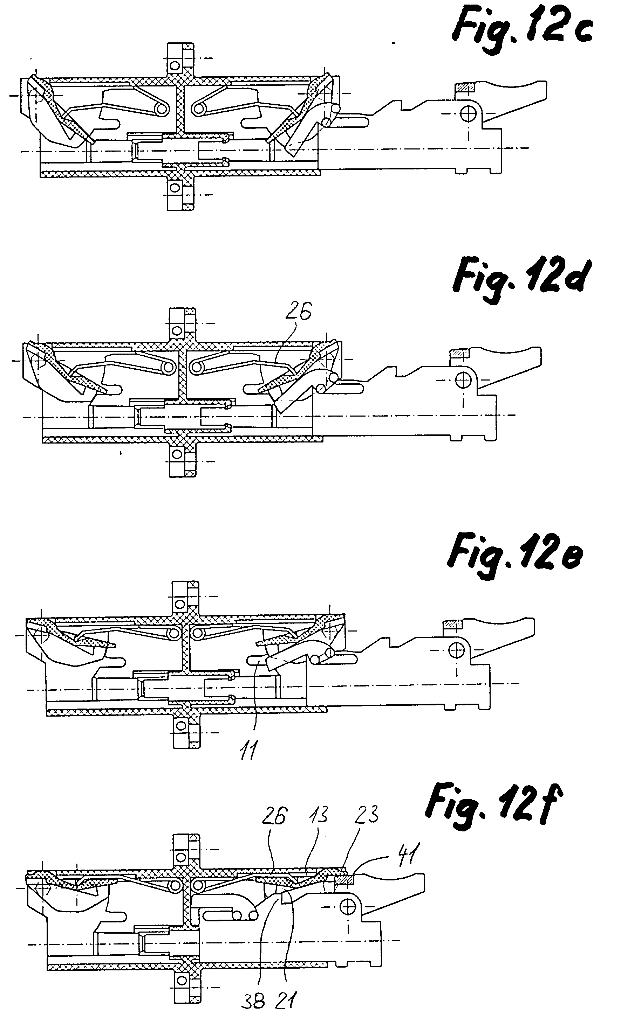

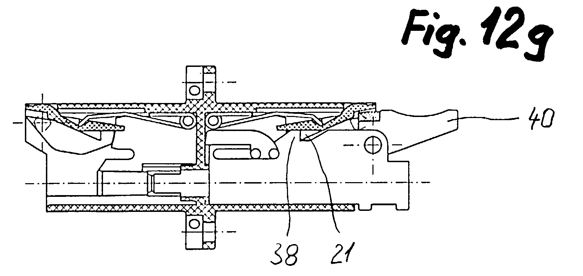

Dieser Öffnungsvorgang wird gemäss Figur 12c fortgesetzt, wobei die Relativbewegung zwischen Buchsengehäuse und Steckergehäuse nur gering ist. Figur 12d zeigt bereits ein Schwenkwinkel der Schutzklappe von 60°. Die Feder 26 wird zunehmend zusammengepresst und die Schraubendrehfeder-Abschnitte verschieben sich nach oben gegen die Deckenwand des Buchsengehäuses.

Gemäss Figur 12e haben Schutzklappe und Schutzdeckel beinahe ihren vollen Öffnungswinkel erreicht. Der Schutzdeckel 15 bzw. dessen Steuerkulissen haben jetzt ihre Steuerfunktion annähernd abgeschlossen. Beim weiteren Einschieben des Steckerteils verlassen die Steuernocken 36, 36' am Schutzdeckel 34 die Führungskulissen und dringen in die seitlichen Steuernuten 11 ein.

Gemäss Figur 12f hat das Steckerteil beinahe seine Endposition im Buchsenteil erreicht. Die Feder 26 ist ganz gespannt und schmiegt sich mit einem Abschnitt in die Ausnehmung 13. Der Schutzdeckel 34 steht in der zurückgeschobenen Position und der Codierungsabschnitt 23 an der Schutzklappe ist in den Codierungsabschnitt 41 am Entriegelungshebel eingetaucht. Die Sperrnase 21 ist allerdings noch nicht hinter der Sperrleiste eingerastet. Bei einer unzulässigen Paarung der Codierungsabschnitte wäre ein weiteres Einschieben des Steckerteils nicht mehr möglich, so dass keine Verriegelung stattfinden könnte. Die Endposition des Steckerteils im Buchsenteil ist in Figur 12g dargestellt. Die Sperrnase 21 ist jetzt hinter der Sperrleiste eingerastet und ein Zurückziehen des Steckers durch Zug am Gehäuse oder am Kabel ist nicht mehr möglich. Erst durch Betätigung des Entriegelungshebels wird die Schutzklappe 15 wieder angehoben, so dass die Sperrnase 21 aus der Sperrleiste befreit wird. Anstelle des Entriegelungshebels wäre es in bestimmten Fällen allerdings auch denkbar, dass die Entriegelung nach dem Push-Pull Prinzip erfolgt. Das Lösen der Arretierung erfolgt dabei durch Zug am Steckergehäuse, das relativ zum Steckerstift verschiebbar ist und das durch diese Relativbewegung die Sperrklinke aus der Arretierung lösen kann.

Das erfindungsgemässe Buchsenteil eignet sich besonders vorteilhaft für eine Steckverbindung für Lichtwellenleiter. Es könnte aber auch für konventionelle elektrische Steckverbindungen eingesetzt werden.

Denkbar wären schliesslich auch Buchsenteile bzw. Steckverbindungen, bei denen die Steckerteile mehrere Steckerstifte bzw. mehrere Lichtwellenleiter aufweisen, wie z.B. an sogenannten Flachbandsteckern. Die zusätzlichen Funktionen der Schutzklappe 15, nämlich die der Steuerung eines Schutzdeckels am Steckerteil und die der Codierung, könnten auch je für sich allein besonders bedeutsam sein und die Steckverbindung insgesamt wesentlich verbessern.

## Patentansprüche

1. Buchsenteil (1) für eine insbesondere optische Steckverbindung mit einem Buchsengehäuse (2), das wenigstens eine Öffnung (7) zum Einführen eines Steckerteils (31) aufweist und mit einer Schutzklappe (15) zum Verschliessen der Öffnung (7), die beim Einführen des Steckerteils gegen die Innenseite des Buchsengehäuses aufschwenkbar ist, dadurch gekennzeichnet, dass die Schutzklappe (15) als Sperrklinke zum Arretieren des Steckerteils (31) im Buchsenteil (1) ausgebildet ist.

2. Buchsenteil nach Anspruch 1, dadurch gekennzeichnet, dass die Schutzklappe (15) um seitliche Gelenknocken (16, 16') schwenkbar ist, welche in Lagerbohrungen (8, 8') am Buchsengehäuse (2) eingerastet sind.

3. Buchsenteil nach Anspruch 1 oder 2, dadurch gekennzeichnet, dass die Schutzklappe (15) mittels einer Feder (26) in die Schliessstellung vorgespannt ist, welche im Abstand zur Schwenkachse der Schutzklappe (15) im Buchsengehäuse gelagert ist und welche an der Innenseite (18) der Schutzklappe angreift.

4. Buchsenteil nach Anspruch 3, dadurch gekennzeichnet, dass die Feder (26) ein etwa U-förmiger Federbügel ist, dessen seitlich abgewinkelte Enden (29) der U-Schenkel (27) gelenkig im Buchsengehäuse (2) gelagert sind und dessen Verbindungsabschnitt (28) der U-Schenkel an einer Lagerstelle (22) an der Schutzklappe (15) anliegt.

5. Buchsenteil nach Anspruch 4, dadurch gekennzeichnet, dass jeder U-Schenkel (27, 27') des Federbügels einen Abschnitt aufweist, der als Schraubendrehfeder (30, 30') ausgebildet ist.

6. Buchsenteil nach einem der Ansprüche 1 bis 5, dadurch gekennzeichnet, dass auf der Aussenseite (17) der Schutzklappe (15) eine Sperrnase (21) angeordnet ist, welche bei ganz eingestecktem Steckerteil (31) hinter einer Sperrleiste (38) am Steckerteil einrastbar ist.

7. Buchsenteil nach einem der Ansprüche 1 bis 6, dadurch gekennzeichnet, dass auf der Aussenseite (17) der Schutzklappe (15) zwei sich in Einsteckrichtung erstreckende, seitlich angeordnete und parallele Führungswangen (19, 19') angeordnet sind, welche der Führung und/oder Steuerung des Steckerteils beim Einstecken in das Buchsenteil dienen.

8. Buchsenteil nach einem der Ansprüche 1 bis 7, dadurch gekennzeichnet, dass auf der Aussenseite (17) der Schutzklappe (15) ein Codierungsabschnitt (23) bestehend aus Materialaussparungen (24) und Materialerhebungen (25) angeordnet ist, der bei ganz eingestecktem Steckerteil (31) mit einem korrespondierenden Codierungsabschnitt (41) am Steckerteil zusammenwirkt, wobei bei einer unzulässigen Paarung der Codierungsabschnitte ein Arretieren des Steckerteils im Buchsenteil durch die Schutzklappe nicht möglich ist.

9. Steckerverbindung für Lichtwellenleiter, mit einem Steckerteil (31), das wenigstens einen Steckerstift (33) aufweist und mit einem Buchsenteil (1), insbesondere nach einem der Ansprüche 1 bis 8, das wenigstens eine Buchse (4) zur Aufnahme des Steckerstifts aufweist, wobei das Buchsenteil wenigstens eine Öffnung (7) zum Einführen des Steckerteils aufweist, die mit einer gegen die Innenseite des Buchsenteils aufschwenkbaren Schutzklappe (15) verschliessbar ist, dadurch gekennzeichnet, dass das Steckerteil (31) eine Sperrleiste (38) aufweist und dass die Schutzklappe (15) als Sperrklinke ausgebildet ist, welche zur Arretierung des Steckerteils im Buchsenteil beim Erreichen der Endposition des Steckerteils hinter der Sperrleiste einrastbar ist.

10. Steckverbindung nach Anspruch 9, dadurch gekennzeichnet, dass am Steckerteil ein Entriegelungshebel (39) angeordnet ist, welcher derart mit der Schutzklappe (15) in Wirkverbindung steht, dass bei seiner Betätigung die Arretierung an der Sperrleiste lösbar ist.

11. Steckverbindung nach Anspruch 9 oder 10, dadurch gekennzeichnet, dass an der Stirnseite (44) des Steckerteils (31) ein gelenkig gelagerter Schutzdeckel (34) angeordnet ist, der mittels einer Führung (36, 20) derart mit dem Buchsenteil zusammenwirkt, dass er durch Einschieben des Steckerteils in das Buchsenteil aus einer Schliessposition in eine Öffnungsposition bewegbar ist, wobei er im Kontakt mit der Schutzklappe (15) diese gleichzeitig aufschwenkt.

12. Steckerteil nach Anspruch 11, dadurch gekennzeichnet, dass der Schutzdeckel (34) wenigstens einen Steuernocken (36) aufweist, der mit wenigstens einer Steuerkulisse (20) an der Schutzklappe (15) zur Steuerung der Öffnungsbewegung zusammenwirkt.

13. Steckverbindung nach Anspruch 12, dadurch gekennzeichnet, dass die Schutzklappe (15) zwei seitlich angeordnet, sich in Einsteckrichtung erstreckende, parallele Führungswangen (19, 19') aufweist, deren Aussenrand als Steuerkulissen (20, 20') dienen und dass der Schutzdeckel (34) zwei in der Bewegungsebene der Führungswangen liegende Steuernocken (36, 36') aufweist.

14. Steckverbindung nach Anspruch 12 oder 13, dadurch gekennzeichnet, dass im Buchsenteil (1) wenigstens eine Steuernut (11) angeordnet ist und dass der Steuernocken (36) des Schutzdeckels (34) in der Endphase der Einsteckbewegung von der Steuerkulisse in die Steuernut übergeführt wird.

15. Steckverbindung nach Anspruch 10, dadurch gekennzeichnet, dass am Entriegelungshebel ein Codierungsabschnitt (41) bestehend aus Materialaussparungen (42) und Materialerhebungen (43) angeordnet ist, der bei ganz eingestecktem Steckerteil (31) mit einem korrespondierenden Codierungsabschnitt (23) an der Schutzklappe (15) zusammenwirkt, wobei bei einer unzulässigen Paarung der Codierungsabschnitte ein Arretieren des Steckerteils im Buchsenteil durch die Schutzklappe nicht möglich ist.

16. Steckverbindung nach Anspruch 15, dadurch gekennzeichnet, dass der Codierungsabschnitt (23) an der Schutzklappe (15) in einem Bereich nahe der Schwenkachse angeordnet ist und dass die Codierungsabschnitte der Schutzklappe und des Entriegelungshebels im eingesteckten Zustand etwa auf einer gemeinsamen Ebene parallel zur Einsteckrichtung liegen.

17. Buchsenteil nach einem der Ansprüche 1 bis 16, dadurch gekennzeichnet, dass das Buchsenteil (1) ein Mittelteil ist, in das von zwei Seiten her je wenigstens ein Steckerteil einschiebbar ist und dass beide Seiten mit je einer Schutzklappe versehen sind.

18. Buchsenteil nach Anspruch 17, dadurch gekennzeichnet, dass es ein Buchsengehäuse (2) aufweist, das einstückig mit einer Buchsenhalterung (3) zur Aufnahme einer Buchse (4) ausgebildet ist.
